# EUROPÄISCHE PATENTANMELDUNG

(11) **EP 1 639 879 A2**
(43) Veröffentlichungstag der Anmeldung: **29.03.2006**
(21) Anmeldenummer: 05106075.4
(22) Anmeldetag: 05.07.2005
(51) Int. Cl.: A01D 41/127

(54) **Messeinrichtung**

(30) Priorität: 07.08.2004 DE 102004038408
(71) Anmelder: DEERE & COMPANY, Moline, Illinois 61265-8098 (US)
(72) Erfinder: Kormann, Georg Dr., 66482, Zweibrücken-Mörsbach (DE); Flohr, Werner, 67661, Kaiserslautern (DE)
(74) Vertreter: Holst, Sönke

(57) **Zusammenfassung**

Die Erfindung bezieht sich auf eine Messeinrichtung (16) mit einem Sensor (18) zur Erfassung von Inhaltsstoffen und/oder Eigenschaften von landwirtschaftlichem Erntegut, wobei dem Sensor (18) eine Oberfläche (26) zugeordnet ist, die in einer Öffnung (14) in einer Wand (12) eines Förderkanals (10) angeordnet ist, durch den sich zu untersuchendes Erntegut bewegt und der Sensor (18) durch die Oberfläche (26) hindurch mit dem Erntegut zusammenwirkt.

Es wird vorgeschlagen, dass die Oberfläche (26) zwischen einer ersten Position, in der sie sich parallel zur Wand (12) des Förderkanals (10) erstreckt, und einer zweiten Position bewegbar ist, in der sie entgegen der Flussrichtung des Ernteguts geneigt ist, so dass das vorbeiströmende Erntegut die Oberfläche (26) von eventuellen Verunreinigungen reinigt.

## Beschreibung

Die Erfindung betrifft eine Messeinrichtung mit einem Sensor zur Erfassung von Inhaltsstoffen und/oder Eigenschaften von landwirtschaftlichem Erntegut, wobei dem Sensor eine Oberfläche zugeordnet ist, die in einer Öffnung in einer Wand eines Förderkanals angeordnet ist, durch den sich zu untersuchendes Erntegut bewegt und der Sensor durch die Oberfläche hindurch mit dem Erntegut zusammenwirkt.

Zur Analyse von Inhaltsstoffen organischen Materials geeignete Messeinrichtungen umfassen in der Regel mit Licht im nahinfraroten Wellenlängenbereich im Reflexions- (NIR) oder Transmissionsmodus (NIT) arbeitende Sensoren, die mit Lichtquellen und optischen Analysatoren ausgestattet sind. Es wurde mehrfach vorgeschlagen, derartige Messeinrichtungen an Erntemaschinen anzubringen, um Eigenschaften des Ernteguts zu erfassen und zu dokumentieren.

Erntemaschinen mit derartigen Messeinrichtungen wurden beispielsweise in der WO 99/46971 A, WO 99/40419 A, WO 00/00818 A, EP 1 053 671 A und in C. von Rosenberg et al., "A rugged nearinfrared spectrometer for the real-time measurement of grains during harvest", Spectroscopy 15 (6), 2000 beschrieben. Die Messeinrichtungen sind jeweils einem Förderkanal der Erntemaschine benachbart angeordnet, durch den Erntegut strömt bzw. gefördert wird. In der DE 102 36 515 C ist eine derartige Messeinrichtung an der Wand einer Kammer angebracht, die durch eine Förderschnecke mit einer aus dem Haupterntegutstrom entnommenen Erntegutprobe befüllt wird.

Zwischen der eigentlichen Messeinrichtung und dem Erntegutstrom ist bei den bekannten Messeinrichtungen ein Fenster mit einer Scheibe angeordnet, die für das zum Messen verwendete Licht durchlässig ist, ein Eindringen des Ernteguts in den Innenraum der Messeinrichtung jedoch verhindert. Die Scheibe wird in der Regel bündig mit der Wand des Förderkanals angeordnet. Unter bestimmten Bedingungen weist diese Positionierung den Nachteil auf, dass die Scheibe durch anhaftendes Erntegut oder andere Verunreinigungen stark verschmutzt, so dass aufgrund fehlender Transmission keine optische Messung am Erntegut mehr stattfinden kann, bzw. dass stets nur die Eigenschaften des an der Scheibe haftenden Ernteguts gemessen werden, die nicht mit denen des aktuell strömenden Ernteguts übereinstimmen müssen.

In der WO 00/00818 A ist die Scheibe in einer Ausführungsform um einen Winkel von 5 bis 10° gegenüber den Oberflächen der Messeinrichtung und des Förderkanals geneigt und ragt etwas über die Oberfläche der Messeinrichtung hinaus in den Förderkanal. Durch diesen Winkel soll erreicht werden, dass von der Lichtquelle der Messeinrichtung einlaufendes und durch die Scheibe reflektiertes Licht nicht zum Detektor gelangt. Die Scheibe ist stationär angeordnet. Auch hier können sich daher Verunreinigungen an der Scheibe ansammeln. Bei einer Ausführungsform, in der die Scheibe dauerhaft in den Erntegutfluss hineinragt, entsteht durch den permanenten Kontakt mit dem Erntegut ein starker Abrieb der Scheibe, solange nicht besonders abriebfestes Material verwendet wird.

Das Problem der Verunreinigung von Sensoroberflächen stellt sich auch bei nicht-optisch arbeitenden Sensoren. So wird in der DE 197 44 485 A vorgeschlagen, eine Messkammer, in der Erntegut durch einen die Feuchtigkeit kapazitiv erfassenden Sensor untersucht wird, durch ein bewegliches Element zwangsweise zu entleeren und zu reinigen. In der DE 197 44 481 A wird vorgeschlagen, den Sensor an der Wand eines Schneckenförderers anzubringen, an dessen Förderwendeln Reinigungselemente angebracht sind. Die JP 57 104 848 A beschreibt einen Sensor zur Erfassung der Kornfeuchte, der mittels zwei in einem Förderkanal angeordneter Elektroden die Leitfähigkeit von zwischen den Elektroden angeordneten Körnern erfasst. Eine der Elektroden wird vor und nach einer Messung im Förderkanal bewegt, um einen Kontakt zwischen den an der Elektrode anhaftenden Körnern und den Körnern im Förderkanal herzustellen und die Elektrode dadurch zu reinigen. Diese Lösungen eignen sich jedoch nicht für Sensoren, deren sensitive Oberflächen an der Wand eines Förderkanals angeordnet sind, in dem das Erntegut nicht durch separate Förderer transportiert wird, sondern nur am Anfang des Förderkanals durch Gebläse oder dgl. beschleunigt wird.

Das der Erfindung zu Grunde liegende Problem wird darin gesehen, eine Messeinrichtung bereitzustellen, bei der nachteilige Einflüsse durch sich an einer sensitiven Oberfläche eines Sensors ansammelndes Erntegut vermieden oder zumindest vermindert werden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, dass die Oberfläche des Sensors zwischen einer ersten Position, in der sie sich parallel zur Wand des Förderkanals erstreckt, und einer zweiten Position, in der sie entgegen der Förderrichtung des Ernteguts geneigt ist, beweglich ist. In der ersten Position, die in der Regel zum normalen Messbetrieb geeignet ist, findet ein relativ geringer Verschleiß der Oberfläche durch vorbeiströmendes Erntegut statt. Allerdings können sich Verunreinigungen und/oder Erntegut an der Oberfläche ansammeln, die zu einer Verfälschung des Messergebnisses führen. Die Oberfläche kann dann in die zweite Position verbracht werden, in der sie sich in den Erntegutstrom hinein neigt, was dazu führt, dass vorbeiströmendes Erntegut die Oberfläche reinigt. Es wäre aber auch denkbar, dass die zweite Position die Messposition ist, während die erste Position einer Außerbetriebsstellung des Sensors entspricht. Weiterhin kann die Oberfläche in eine Außerbetriebsstellung außerhalb des Förderkanals verbracht werden.

Auf diese Weise erreicht man eine selbsttätige Reinigung der Oberfläche. Dadurch entfallen eventuelle Verfälschungen des Messergebnisses. Die Ausgangswerte des Sensors können georeferenziert kartiert und/oder zur Regelung bzw. Einstellung von Arbeitsparametern der Erntemaschine herangezogen werden.

In einer bevorzugten Ausführungsform ist der Sensor gemeinsam mit der Oberfläche zwischen der ersten und zweiten Position bewegbar. Dadurch vermeidet man Änderungen der relativen Positionen von Sensor und Oberfläche, die zu Messfehlern führen könnten.

Es bietet sich an, die Oberfläche und vorzugsweise auch den Sensor an ihren bzw. seinem in Flussrichtung des Ernteguts im Förderkanal stromauf liegenden Ende um eine sich quer zur Flussrichtung erstreckende Achse schwenkbar anzulenken. Am in Flussrichtung stromab liegenden Ende ist die Oberfläche und vorzugsweise auch der Sensor manuell oder durch einen Aktor bewegbar mit der Wand des Förderkanals verbunden, um die Oberfläche und/oder den Sensor um die Achse zu verschwenken und zwischen der ersten und zweiten Position zu bewegen.

Die zweite Position wird durch einen fremdkraftbetätigten Aktor zweckmäßigerweise auf eine manuelle Eingabe eines Bedieners hin oder selbsttätig angefahren. Die zweite Position kann nach Ablauf einer bestimmten Zeitspanne (z. B. nach 10 min) oder nach Feststellung eines nicht plausiblen Ausgabewerts des Sensors selbsttätig angefahren werden. Ein derartiger, nicht plausibler Ausgabewert liegt beispielsweise dann vor, wenn der Ausgabewert des Sensors über eine bestimmte Zeitspanne (z. B. 10 s) konstant ist, oder wenn er ein Vorhandensein von Erntegut signalisiert, während kein Erntegut durch den Förderkanal strömt, was anhand des Betriebszustands von Förderelementen oder durch andere Sensoren, z. B. Lichtschranken, nachgewiesen werden kann. Auf analoge Weise, d. h. nach Ablauf einer bestimmten Zeitspanne oder bei sich ändernden Ausgabewerten des Sensors, kann die Oberfläche und ggf. der Sensor anschließend selbsttätig in die erste Position verbracht werden.

Der Sensor arbeitet vorzugsweise optisch, insbesondere im Nahinfrarotbereich und insbesondere im Reflexionsmodus. Die Oberfläche ist dann eine im vom Sensor verwendeten Wellenlängenbereich durchlässige Scheibe. Diese Scheibe besteht vorzugsweise aus relativ hartem, abriebfestem Material, z. B. Diamant- oder Saphirglas. Bei anderen Ausführungsformen kann der Sensor aber auch beispielsweise kapazitiv oder mit Mikrowellen arbeiten oder den elektrischen Widerstand des Ernteguts messen, um die Feuchte zu ermitteln.

Die erfindungsgemäße Messeinrichtung kann an stationären Anlagen oder beliebigen Erntemaschinen verwendet werden, bei denen das Erntegut am Sensor vorbeiströmt oder der Sensor am Erntegut vorbeibewegt wird, z. B. an einem Schwad.

In den Zeichnungen sind zwei nachfolgend näher beschriebene Ausführungsbeispiele der Erfindung dargestellt. Es zeigt:
- Fig. 1: eine schematische seitliche Ansicht einer ersten Ausführungsform einer Messeinrichtung in ihrer ersten Position,
- Fig. 2: eine schematische seitliche Ansicht der ersten Ausführungsform der Messeinrichtung in ihrer zweiten Position,
- Fig. 3: eine schematische seitliche Ansicht einer zweiten Ausführungsform einer Messeinrichtung in ihrer ersten Position, und
- Fig. 4: eine schematische seitliche Ansicht der zweiten Ausführungsform der Messeinrichtung in ihrer zweiten Position.

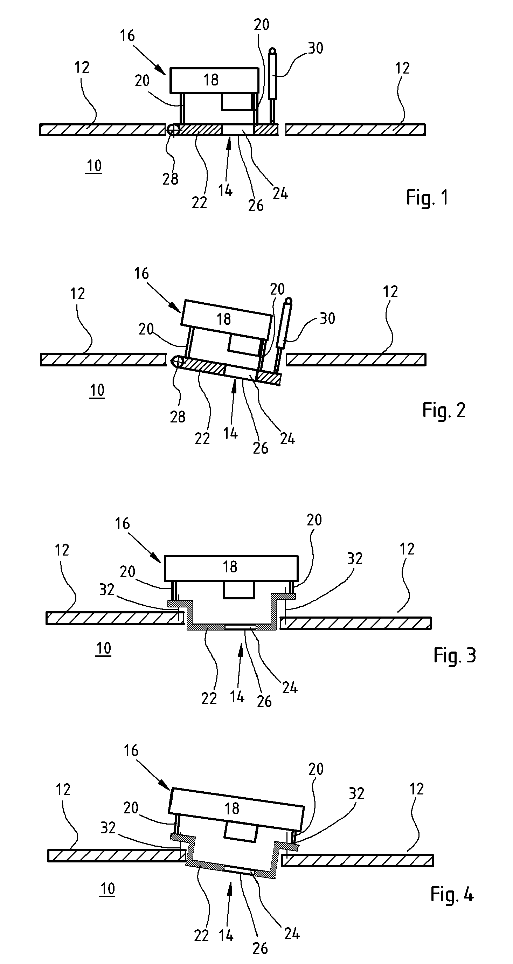

In den Figuren wird durch das Bezugszeichen 10 ein Förderkanal einer selbstfahrenden Erntemaschine gekennzeichnet, bei dem es sich z. B. um eine stromab eines Gebläses angeordnete, zur Vorgabe der Auswurfrichtung gehäckselten Ernteguts auf ein Transportfahrzeug bewegliche Austrageinrichtung eines Feldhäckslers oder den Zuführkanal einer Ballenpresse oder einen Bereich eines Mähdreschers handeln kann, in dem gedroschenes oder ungedroschenes Getreide gefördert wird, z. B. den Schrägförderer oder den Förderer zur Befüllung des Korntanks. Der Förderkanal 10 ist durch eine Wand 12 begrenzt. Die anderen Wände des Förderkanals 10 sind in den Figuren nicht dargestellt; sie können auch zum Teil entfallen, beispielsweise wenn der Förderkanal 10 eine Austrageinrichtung eines Feldhäckslers ist. In den Figuren 1 bis 4 strömt das Erntegut im Erntebetrieb jeweils horizontal von links nach rechts durch den Förderkanal 10.

In der Wand 12 ist eine Öffnung 14 vorgesehen, die zur Aufnahme einer Messeinrichtung dient, die insgesamt mit 16 gekennzeichnet ist. Die Messeinrichtung 16 umfasst in beiden Ausführungsformen einen Sensor 18, der ein im Reflexionsmodus arbeitender optischer Sensor ist. Der Sensor 18 arbeitet im nahen Infrarotbereich und beaufschlagt das Erntegut im Förderkanal 10 mit breitbandigem Licht und teilt das von den Pflanzen reflektierte Licht über wellenlängendispersive Elemente (Gitter o. dgl.) in ein Spektrum auf, das durch geeignete lichtempfindliche Detektoren wellenlängenselektiv nachgewiesen wird. Ein geeigneter Sensor wird in der DE 199 22 867 A beschrieben, deren Inhalt durch Verweis mit in die vorliegenden Unterlagen aufgenommen wird.

Der Sensor 18 erfasst mehrere Eigenschaften der gehäckselten Pflanzen, insbesondere deren Inhaltsstoffe oder eine oder mehrere daraus abgeleitete Größen. Als Inhaltsstoffe des Erntegutes, deren Anteile im Erntegut vom Sensor 18 erfasst werden, kommen insbesondere organische Inhaltsstoffe in Betracht, wie Stärke, enzymlösliche organische Substanzen (ElosT), Öl, und Rohprotein. Außerdem kann auch der Gehalt an nichtorganischen Inhaltsstoffen, wie Mineralstoffen (Asche), z.B. Natrium und Magnesium, Verunreinigungen in Form von Sand (Siliziumdioxid) und Erde oder Wasser und die Farbe der Pflanzen gemessen werden.

Parameter des Erntegutes, die zusätzlich oder alternativ zu den Inhaltsstoffen erfasst bzw. daraus abgeleitet werden können, sind insbesondere der Gehalt an Trockensubstanz, die Faserlänge, die Verdaulichkeit, der Energiegehalt und der Rohfasergehalt des Erntegutes. Der Rohfasergehalt und die Faserlänge können insbesondere durch eine Weiterverarbeitung von Ausgangssignalen des Sensors 18 mittels eines Rechners ermittelt werden.

Der Sensor 18 ist durch zwei oder mehr Tragarme 20 mit einer Halteplatte 22 verbunden. Die Halteplatte 22 trägt eine Scheibe 24 mit einer äußeren, dem Erntegutfluss zugewandten Oberfläche 26. Durch die Scheibe 24 erreicht das vom Sensor 18 erzeugte Licht das Erntegut und das vom Erntegut reflektierte Licht wiederum den Sensor 18, der es nachweist. Ein optische Elemente enthaltender Stutzen des Sensors 18 erstreckt sich in Richtung auf die Scheibe 24 zu und könnte zur Abschirmung gegen Fremdlicht auch an der Scheibe 24 und/oder der Halteplatte 22 anliegen.

Die Halteplatte 22 ist an ihrem in Flussrichtung des Ernteguts im Förderkanal 10 stromauf, d. h. in den Figuren 1 und 2 links liegenden Ende um eine quer zur Flussrichtung des Ernteguts und sich in der Ebene der Wand 12 erstreckende Achse 28 schwenkbar an der Wand 12 angelenkt. An der Halteplatte 22 ist an ihrem in Flussrichtung des Ernteguts stromab, d. h. in den Figuren 1 und 2 rechts liegenden Ende ein Aktor 30 in Form eines Hydraulikzylinders oder elektrischen Linearmotors angelenkt, dessen anderes Ende wiederum an einem mit der Wand 12 mechanisch gekoppelten Element (nicht dargestellt) angelenkt ist.

Durch eine Aktivierung des Aktors 30 können die Halteplatte 22 und mit ihr die Scheibe 26 und der Sensor 18 um die Achse 28 verschwenkt werden. Dadurch kann die Halteplatte 22 aus der in der Figur 1 dargestellten ersten Position, die zum normalen Messbetrieb dient und in der sich die Halteplatte 22 und mit ihr die Oberfläche 26 parallel zur benachbarten Wand 12 erstrecken, schräg in die in Figur 2 dargestellte zweite Position in den Erntegutstrom verbracht werden. In der zweiten Position prallt das Erntegut unter einem spitzen Winkel auf die Oberfläche 26 auf, was eine Reinigungswirkung für die Oberfläche 26 bedingt und zu einer Verbesserung der Messgenauigkeit führt. Um einen übermäßigen Abrieb der Scheibe 24 zu verhindern, ist sie aus Diamant- oder Saphirglas. Die Betätigung des Aktors 30 erfolgt auf eine manuelle Eingabe eines Bedieners oder selbsttätig, wenn eine bestimmte Zeitspanne abgelaufen ist oder die Signale des Sensors 18 über eine bestimmte Zeitspanne konstant bleiben oder darauf hinweisen, dass Erntegut vorhanden ist, obwohl anhand des Zustands anderer Sensoren oder Aktoren erkennbar ist, dass tatsächlich kein Erntegut gefördert wird. Auf analoge Weise wird der Sensor 18 wieder in seine erste Position verbracht.

Die zweite, in den Figuren 3 und 4 dargestellte Ausführungsform entspricht in wesentlichen Teilen der ersten Ausführungsform. Gleichartige Bestandteile sind mit übereinstimmenden Bezugszeichen gekennzeichnet. Im Unterschied dazu erstreckt sich die Wand 12 jedoch stromab der Öffnung 14 weiter in den Erntegutstrom hinein als stromauf der Öffnung 14. Außerdem ist die Halteplatte 22 U-förmig abgewinkelt und am stromauf liegenden Ende und am stromab liegenden Ende jeweils durch einen Aktor 32 in Form einer Stellschraube mit der benachbarten Wand 12 verbunden. Durch manuelles Betätigen der Stellschrauben kann die Halteplatte 22 mit dem Sensor 18 und der Scheibe 24 zwischen der in der Figur 3 dargestellten ersten Position, in der sich die Oberfläche 26 für den normalen Messbetrieb parallel zur benachbarten Wand 12 erstreckt, und der in der Figur 4 dargestellten zweiten Position, in der sich die Oberfläche 26 schräg in den Erntegutfluss erstreckt und durch das aufprallende Erntegut von eventuellen Verunreinigungen gereinigt wird, bewegt werden.

## Patentansprüche

1. Messeinrichtung (16) mit einem Sensor (18) zur Erfassung von Inhaltsstoffen und/oder Eigenschaften von landwirtschaftlichem Erntegut, wobei dem Sensor (18) eine Oberfläche (26) zugeordnet ist, die in einer Öffnung (14) in einer Wand (12) eines Förderkanals (10) angeordnet ist, durch den sich zu untersuchendes Erntegut bewegt und der Sensor (18) durch die Oberfläche (26) hindurch mit dem Erntegut zusammenwirkt, **dadurch gekennzeichnet, dass** die Oberfläche (26) zwischen einer ersten Position, in der sie sich parallel zur Wand (12) des Förderkanals (10) erstreckt, und einer zweiten Position bewegbar ist, in der sie entgegen der Flussrichtung des Ernteguts geneigt ist, so dass das vorbeiströmende Erntegut die Oberfläche (26) von eventuellen Verunreinigungen reinigt.

2. Messeinrichtung (16) nach Anspruch 1, **dadurch gekennzeichnet, dass** der Sensor (18) gemeinsam mit der Oberfläche (26) bewegbar ist.

3. Messeinrichtung (16) nach einem der Ansprüche 1 oder 2, **dadurch gekennzeichnet, dass** die Oberfläche (26) und/oder der Sensor (18) am in Flussrichtung des Ernteguts stromauf liegenden Ende schwenkbar angelenkt und an seinen in Flussrichtung des Ernteguts stromab liegenden Ende durch einen fremdkraftbetätigten und/oder manuell verstellbaren Aktor (30, 32) bewegbar ist bzw. sind.

4. Messeinrichtung (16) nach Anspruch 3, **dadurch gekennzeichnet, dass** der Aktor (30) auf manuelle Eingabe eines Bedieners und/oder selbsttätig betätigbar ist, insbesondere nach Ablauf einer vorbestimmten Zeitspanne und/oder nach Feststellung eines nicht plausiblen, beispielsweise konstanten Ausgabewertes des Sensors.

5. Messeinrichtung (16) nach einem der Ansprüche 1 bis 4, **dadurch gekennzeichnet, dass** der Sensor (18) ein optischer Sensor ist und dass die Oberfläche (26) die Oberfläche einer im vom Sensor (18) verwendeten Wellenlängenbereich transparenten Scheibe (24) ist.

6. Messeinrichtung (16) nach Anspruch 5, **dadurch gekennzeichnet, dass** die Scheibe (24) aus abriebresistentem Material, beispielsweise Diamant- oder Saphirglas ist.

7. Erntemaschine mit einer Messeinrichtung (16) nach einem der vorhergehenden Ansprüche.
